# EUROPEAN PATENT SPECIFICATION

(11) **EP 1 179 155 B1**
(45) Date of publication and mention of the grant of the patent: **02.02.2005**
(21) Application number: 00927578.5
(22) Date of filing: 15.05.2000
(51) Int. Cl.: F16L 21/08, F16L 37/092

(54) **PIPE FITTING**
ROHRVERBINDUNG
RACCORD DE TUYAUTERIE

(30) Priority: 14.05.1999 GB 9911350
(43) Date of publication of application: 13.02.2002
(73) Proprietor: HEPWORTH BUILDING PRODUCTS LIMITED, Sheffield S36 4HG (GB)
(72) Inventor: BEEVER, Andrew, Stocksmoor, Huddersfield HD4 6XN (GB)
(74) Representative: Mounteney, Simon James
(86) International application number: PCT/GB2000/001846
(87) International publication number: WO 2000/070258

(56) References cited:
- EP-A- 0 562 999
- GB-A- 1 464 741
- US-A- 5 487 572

## Description

The present invention relates to a push-fit pipe fitting. Such fittings are commonly used in various plumbing applications and have the advantage that few or no tools are required to form a joint between the fitting and any pipe spigot which is received in a socket provided on the fitting. Such fittings are generally well known.

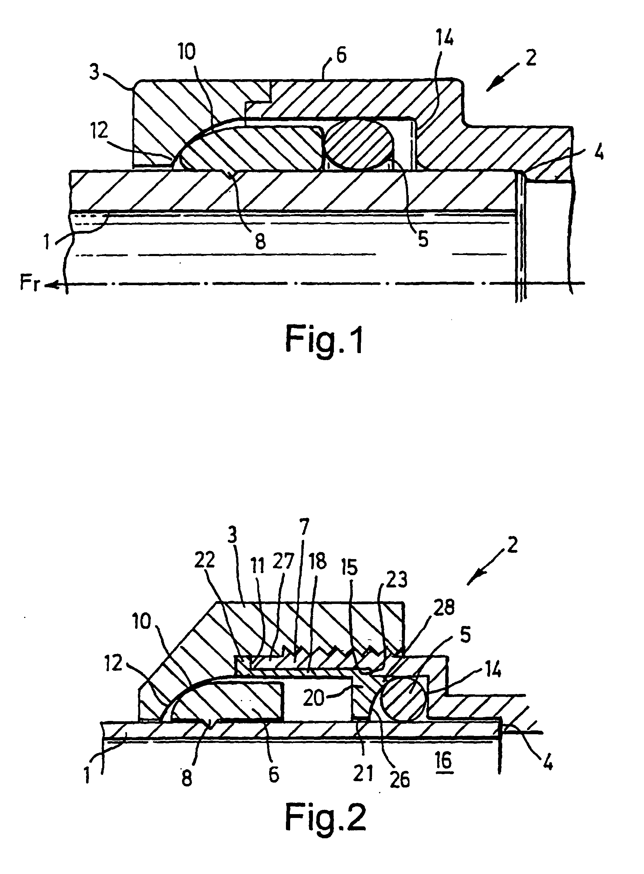

Figure 1 of the accompanying drawings shows a partial sectional view through a known fitting and pipe, together forming a joint.

The pipe 1 end is inserted into the socket of the fitting 2 until an end stop 4 is reached. A grab wedge 6 acts as a gripping part, and takes the form of a contracting ring through which the pipe 1 is inserted as it is pushed into the fitting 2. The grab wedge 6 comprises radially inwardly directed teeth 8. An elastomeric O-ring seal 5 is also situated inside the socket of the fitting 2 at a position that is axially inside, relative to the grab wedge 6. The O-ring seal 5 is of such a configuration that it is compressed, in the radial direction, between a radially inner surface of the socket wall and a radially outer surface of the pipe wall, so as to form a seal between the two.

If a destructive axial force Fr is applied to the pipe 1 and tends to urge it out of the fitting 2, a radially outer camming surface 10 provided on the grab wedge 6 cooperates with a complementary camming surface 12 situated in the mouth of the socket. As the force Fr is applied to the pipe 1, the grab wedge 6 moves with the pipe, due to the action of the teeth 8. As a result of this movement and the consequent interaction of the camming surfaces 10,12, a radial closing force is applied to the grab wedge 6. This closing force serves to embed the teeth 8 more firmly into the pipe 1 and thus grip the pipe ever more securely. Eventually, the two camming surfaces wedge together and, in combination with the teeth 8, prevent any further axial displacement.

The fitting 2 is designed for use with pipes manufactured from a range of materials. Typically these will be plastics, such as polybutylene, or metals such as copper. This piping will typically be supplied in long lengths (sometimes rolled onto a drum) which are cut to a suitable length at the point of installation. Special tools are provided for cutting the pipe. These have several purposes, one of which being the purpose of ensuring that the end of the cut pipe has no rough edges or burrs. However, these tools occasionally get lost or ignored and it is not, therefore, uncommon for a fitter to use a hack-saw or the like to cut piping to an appropriate length. In such a case, it is not unusual for the end of the piping to have a rough edge or burrs. If such a pipe end is inserted into the fitting, it is quite possible that the O-ring seal 5 may be damaged, since it is made from rubber or some other similarly soft material. If such damage occurs, the integrity of the seal will be reduced and, in extreme cases, catastrophic failure may result.

The present invention sets out to provide a pipe fitting which resists such damage to a seal.

Referring again to Figure 1, it will be seen that the O-ring 5 is located adjacent an axially-facing annular seating shoulder 14. This shoulder acts as a seat for the O-ring 5, particularly when the pipe 1 is inserted into the socket of the fitting 2. In order to effect the necessary seal between the O-ring and the outer surface of the pipe 1, the radially inner diameter of the O-ring 5 is slightly smaller than the radially outer surface of the pipe 1. This means that the O-ring 5 will provide certain resistance to the insertion of the pipe 1.

In certain circumstances, it has been found that the O-ring 5 can become unsuitably deformed and axially displaced, as the pipe 1 is inserted into the socket of the fitting 2. This sometimes occurs where the pipe is inserted along a path which is at an angle to the longitudinal axis of the fitting, or where a burr or other irregularity catches the O-ring 5, during insertion. In some cases, the O-ring 5 can be deformed to the extent that a portion of it is forced past the shoulder 14 and into the neck 16 of the fitting that is situated axially beyond it. Such deformation is highly undesirable because it degrades the quality of the seal and can even prevent the pipe from being fully inserted. Deformation can be caused either by the pipe 1 acting directly on the O-ring 5 or as a consequence of forces transmitted from the pipe 1 to the O-ring 5, via the grab wedge 6.

The present invention also sets out to provide a fitting which prevents such deformation of a seal occurring.

According to the invention there is provided a pipe-fitting comprising a socket for receiving a pipe portion, the said socket comprising a mouth and a bore, the said bore containing a generally cylindrical retaining element for retaining the pipe portion within the socket and an annular seal for sealing between the socket and the pipe portion; and further comprising a sleeve which is, in use, situated within the socket, the said sleeve comprising a radially inwardly directed flange located in a region adjacent the seal, for protecting the seal from the pipe portion when it is inserted into the socket; the said retaining element can be substantially entirely received within the said sleeve in a first condition or slide axially, so as to project from the said sleeve in a second condition in which it interacts with the said bore to effect a gripping action upon a said pipe portion.

The radially inwardly directed flange may comprise an axial projection on a surface facing the said seal. The projection may be in the form of an annular lip.

The annular lip may be provided with an inclined radially inner surface. The inclined surface may have a concave, arcuate profile in cross-section.

The sleeve may be axially fixed within the socket.

The sleeve may be provided with a radial projection for location within a radial recess in a wall of the socket for securing the axial position of the sleeve within the socket. The radial projection may be a flange.

The sleeve may be provided with a substantially cylindrical portion for location in a region adjacent the socket mouth in order to define an aperture for receiving the pipe portion into the socket.

The said sleeve may comprise a camming surface on a radially inner surface thereof, for co-operation with a camming surface provided on a radially outer surface of the retaining element, for causing the retaining element to contract, upon axial movement thereof, so as to grip a radially outer surface of the pipe portion. In such a fitting the camming surface may be annular, and may also be connected to the substantially cylindrical portion of the sleeve.

The camming surface and substantially cylindrical portion of the sleeve may be defined by a plurality of leaves hinged to the remainder of the sleeve. Four leaves may be provided.

One or more additional sleeves may be provided, the substantially cylindrical portion of the or each sleeve having a respectively different diameter, and the sleeves all being interchangeable. In such a case, each sleeve may be of a different colour.

Embodiments of the invention will now be described, by way of example and with reference to the accompanying drawings in which:-
Figure 1 shows a partial sectional view of a known pipe fitting;
Figure 2 shows a partial sectional view of a first embodiment of the invention;
Figure 3 shows a partial sectional view through a fitting defining a second embodiment of an invention;
Figure 4 is a cross-section through the inner sleeve of the fitting of Figure 3;
Figure 5 is a view of an alternative inner sleeve in accordance with the invention;
Figure 6 is a perspective view of a still further inner sleeve in accordance with the invention;
Figure 7 is a partial sectional view through a fitting defining a further embodiment of the invention; and
Figure 8 is a partial cross-sectional view through a further inner sleeve in accordance with the invention.

Referring now to Figure 2, it will be seen that the fitting is generally similar to that of Figure 1, with the exception that it further comprises an inner sleeve 18. Although the fitting comprises a differently configured cap 3, that is demountably fitted to the fitting body by means of a thread, this aspect of the fitting does not form part of the invention and merely illustrates an alternative configuration that is one of many that could be used in conjunction with the invention. Indeed, the construction used in Figure 1 could equally be used. Furthermore, although the fitting-mouth camming surface 12 has an arcuate profile in Figure 2, a frusto-conical surface, such as shown in Figure 1, or any other suitable configuration could be used.

The sleeve 18 has a generally cylindrical shape and is formed from a suitable plastics material, such as polypropylene or polybutylene. Other materials may be used, including other plastics materials and metal, such as stainless steel. The sleeve 18 comprises a cylindrical sidewall 24 with a radially outwardly directed annular flange 22 at one end and a radially inwardly directed base flange 20, at its other axial end. The base flange 20 defines a radially central base aperture 21. It is of sufficient diameter to accommodate a pipe 1 when it is inserted into the fitting. The base flange 20 is further provided with an axially-rearwardly projecting annular lip 28 that has an arcuate surface 26. The lip extends only part way towards the radially outer perimeter of the base flange, thereby defining a peripheral annular rebate 23.

The radially inner surface of the body 7 of the fitting 2 is provided with a further, annular axially facing shoulder 15. When the sleeve 18 is installed within the body of the fitting 2, the peripheral rebate 23 abuts the shoulder 15, which acts as a sleeve seat, so as to provide relative axial security between the two and provide a certain degree of axial support for the base flange 20. In addition, the radially outer flange 22 locates over an axial end portion 11 of the fitting body 7. As the cap 3 is mounted onto the body 7, the radially outer flange 22 becomes clamped between the body 7 and the cap 3, so as to retain its axial position within the fitting socket securely. It will be noted that the sleeve, which must be inserted into the fitting body 7 after the O-ring seal 5, serves to trap the O-ring 5.

In use, the sleeve effectively protects the O-ring from damage by a rough end of a pipe. This preserves the integrity of the seal. In addition, the base flange 20 blocks the O-ring 5 from the grab wedge 6 and, therefore, protects the O-ring 5 from being displaced by the grab wedge 6 when the pipe is inserted. In this regard, the generally cylindrical configuration of the sleeve 18 ensures that the base flange is not significantly displaced from its alignment with a radial plane. If the sleeve 18 was replaced by a simple washer having the configuration of the base flange 20, the washer could still be angularly displaced and, therefore, allow the O-ring 5 to be subjected to an uneven insert force, hence urging it into the fitting neck 16.

The seal seat 26 provided on the rear surface of the base flange serves to locate the O-ring 5. However, if desired it may be omitted and the base flange 20 may, instead, be provided with a plain, flat surface for addressing the O-ring 5.

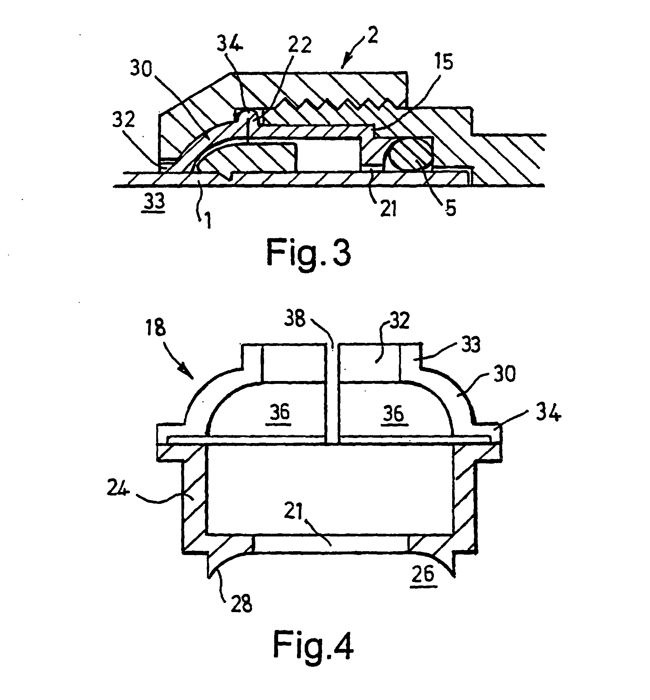

Figure 3 shows a further embodiment of the invention comprising a variation of the sleeve shown in Figure 2. Figure 4 shows a cross-section of the sleeve itself, for better understanding.

As will be seen from the figures, the sleeve 18 of the second embodiment is generally similar to that of the first embodiment, but includes four additional leaves 36, which are each hinged to the remainder of the sleeve 18 via a series of respective hinges 34 connected to the radially outer flange 22. Each leaf 36 occupies slightly less than one quarter of the circumference of the sleeve 18. The individual leaves 36 are separated by intermediate slots 38, which enable the leaves 36 to be moved about their respective hinges.

The leaves 36 together define a dome-like structure which corresponds with the shape and configuration of the radiussed socket mouth camming surface 12. Indeed, the radially inner surfaces of the arcuate portions of the leaves 36 define camming surfaces which work in exactly the same way with the grab wedge 6 as does the mouth camming surface 12.

The sleeve 18 further comprises a series of cylindrical wall portions 32, each being distally provided on a respective one of the leaves 36, so that, together, they define a cylindrical sleeve mouth 33.

By providing the leaves 36 in this fashion, the diameter of the sleeve mouth 33 can be set to co-operate with a pipe 1 of a specific diameter, largely irrespective of the diameter of the socket mouth. This means that, by providing a range of sleeves having sleeve mouths of different diameters, a single fitting body may be used for a range of pipe diameters, merely by selecting an appropriately dimensioned sleeve 18. In such a case, the sleeves could be colour-coded or include some other indicia, in order to indicate the respective diameters.

It should be noted that the sleeve has the camming surface and mouth formed from a series of leaves in order to facilitate manufacture by injection moulding. In the manufacturing process, the sleeve is moulded with the leaves in the "open" position and a collapsing core is, therefore, not needed. The leaves are closed into the position shown in Figure 4 prior to use and prior to installation within the remainder of the fitting. Although, in this embodiment, four leaves have been chosen, a different number could be used, if desired. However, it has been found that four provides a good degree of strength and manufacturing benefits.

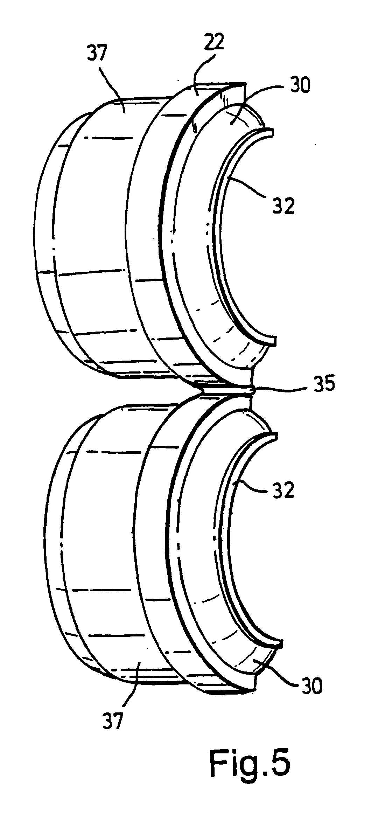

Figure 5 shows an alternative configuration for the inner sleeve 18. In use, the overall general configuration of the inner sleeve is identical to that of Figure 4. However, rather than being formed from a cylindrical portion 24 provided with a series of leaves 36, the sleeve is divided into two halves 37 along a plane facing perpendicular to its axis. These two halves 37 are joined by an axial hinge 35 in the region situated on the radially outwardly projecting flange 22.

As will be seen from Figure 5, the axial hinge 35 enables the two sleeve halves 37 to be moulded in an "opened out" condition and the two can be subsequently brought together to form the inner sleeve, after moulding and prior to installation within the remainder of the fitting. This construction obviates the need to form the sleeve camming section 30 and the mouth 33 from a series of leaves 36.

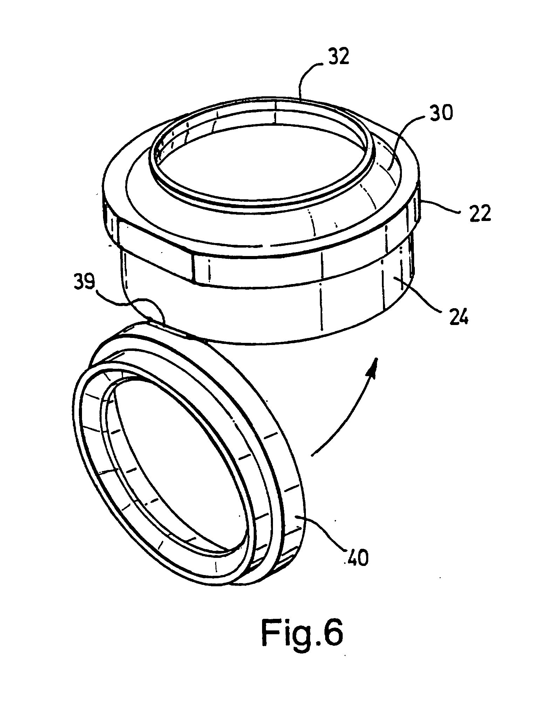

Figure 6 shows a still further embodiment of the inner sleeve 18. In this embodiment, it will be seen that the mouth 33 and the sleeve camming section 30 are formed integrally with the cylindrical sidewall 24. However, the cylindrical sidewall 24 is divided in a plane facing parallel to the axis, so as to define a sleeve base portion 40, which is joined to the remainder of the sleeve 18 by a circumferential hinge 39. Once again, the sleeve 18 can be moulded in an "open" condition in order to facilitate manufacture and the base portion 40 can subsequently be rotated about the hinge 39 in order to close it up prior to installation of the remainder of the fitting.

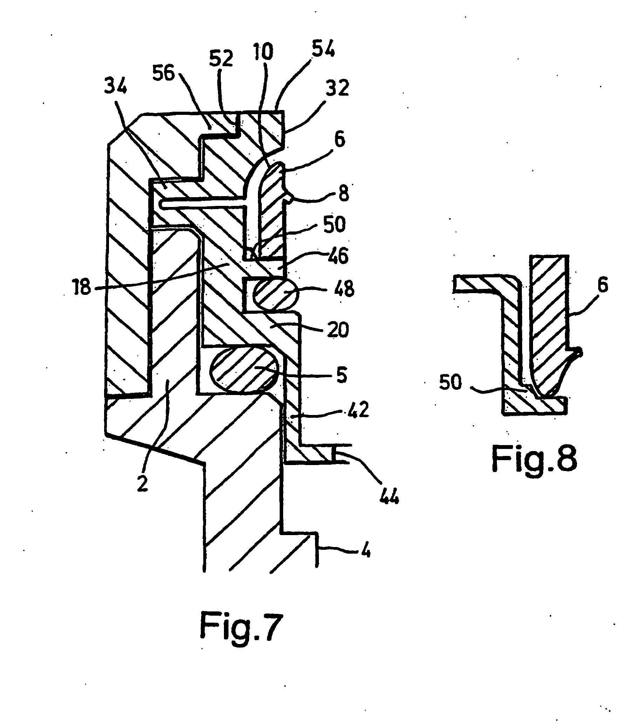

Figure 7 shows a yet further embodiment of a fitting comprising an inner sleeve 18, in accordance with the invention. This has general similarities to the embodiments of Figures 3 to 6, but comprises numerous differing features.

Referring to Figure 7, it will be seen that the sleeve 18 extends further in the axially inward direction by virtue of a cylindrical inner sleeve portion 42, which terminates in a radially inwardly directed inner flange 44. This inner sleeve portion extends into the neck of the fitting and serves to support a pipe in use.

The sleeve of Figure 7 also comprises a further radially inwardly directed outer flange 46, that is located at a position that is axially outward of the base flange 20 and the inner flange 44. The outer flange 46 divides the grab wedge-accommodating area of the sleeve 18 into two adjacent axial portions. The first of these, situated closer to the mouth of the fitting, accommodates a grab wedge 6. The second region, which essentially defines an annular channel, accommodates an auxiliary annular seal 48.

It will be noted that the sleeve mouth wall 32, defined by the axially outermost portion of the sleeve 18, the radially innermost surface of the outer flange 46 and the radially innermost surface of the inner sleeve portion 32 are all radially aligned. It will also be apparent from Figure 7 that the grab wedge 6 and auxiliary seal 48 are significantly smaller than the corresponding pipe-addressing components of the other embodiments. It will therefore be appreciated that the sleeve 18 of Figure 7 can essentially be used to define the internal size of the fitting, thereby enabling a relatively large fitting to properly accommodate and operate with a pipe of relatively narrow diameter. The grab wedge 6 and seal 48 operate in exactly the same way as the grab wedge 6 and seal 5 of previous embodiments. The outer flange 46 corresponds with the base flange 20 of previous embodiments. The inner flange 44 corresponds with the end stop 4 of previous embodiments.

The seal 5 from previous embodiments is utilised in order to provide an adequate seal between the radially outer aspect of the sleeve 18 and the radially inner aspect of the fitting body.

It will be understood that, by providing a number of sleeves 18, of varying inner dimensions each having an associated size of seal 48 and grab wedge 6, a single housing 2 can be used to couple with a range of pipes of different diameters. As discussed in the previous embodiments, the sleeves can be colour-coded. In such a case, due to the fact that an end face 54 can be seen at the mouth of the cap 3, a user can instantly appreciate which type of sleeve is accommodated within the fitting.

In the case of Figure 7, the radially outer surface of the axially outer portion of the cylinder 18 comprises a rebate 52 which enables it to be held in place by a correspondingly-configured lip 56 situated about the mouth of the cap 3. The hinged portion 34 of the cylinder 18 is also accommodated within a recess between the cap and the body, as with previous embodiments. These features have the effect of constraining the axial movement of the cylinder 18 within the fitting, although some axial movement may be allowed, by appropriate selection of the relative dimensions of the components.

The outer flange 46 is provided with a guard step 50 for preventing reverse-insertion of the grab wedge 6. This feature is not limited to this particular embodiment and may be readily included in other configurations. Figure 8 shows a similar feature provided on a cylinder having features similar to that of the embodiment of Figure 2.

Figure 8 shows a grab wedge 6 inserted in the reverse position. It will be seen that the camming surface 10 bears against the radially inner surface of the guard step 50, thereby restricting its radial expansion. The consequence of this feature is that, if a pipe is subsequently inserted into the fitting, the grab wedge is prevented from expanding to accommodate the pipe, which prevents the pipe from being inserted.

Many other constructions providing similar benefits to the above can be employed. For example the parts of the sleeve could be snap-fitted together, rather than hinged. Furthermore, collapsing core technology would enable the sleeve to be moulded as a single element. Blow moulding would provide similar benefits, but might require subsequent machining.

For the avoidance of doubt, it is here emphasised that individual features from the described embodiments can be combined. The various combinations resulting have not been set out in detail, for the sake of brevity.

Many further modifications and variations will suggest themselves to those versed in the art upon making reference to the foregoing illustrative description of preferred embodiments, which are given by way of example only and which are not intended to limit the scope of the invention as defined by the appended claims.

## Claims

1. A pipe-fitting comprising a socket for receiving a pipe portion (1), the said socket comprising a mouth and a bore, the said bore containing a generally cylindrical retaining element (6) for retaining the pipe portion (1) within the socket and an annular seal (5) for sealing between the socket and the pipe portion (1); and further comprising a sleeve (18) which is, in use, situated within the socket, the said sleeve (18) comprising a radially inwardly directed flange (20) located in a region adjacent the seal (5), for protecting the seal from the pipe portion when it is inserted into the socket;
**characterised in that** the said retaining element (6) can be substantially entirely received within the said sleeve (18) in a first condition or slide axially, so as to project from the said sleeve (18) in a second condition in which it interacts with the said bore to effect a gripping action upon a said pipe portion (1).

2. A pipe-fitting according to Claim 1, wherein the said radially inwardly directed flange (20) comprises an axial projection (28) on a surface facing the said seal (5).

3. A pipe-fitting according to Claim 2, wherein the projection (28) is in the form of an annular lip.

4. A pipe-fitting according to Claim 3, wherein the said annular lip is provided with an inclined radially inner surface (26).

5. A pipe-fitting according to Claim 4, wherein the said inclined surface (26) has a concave, arcuate profile in cross-section.

6. A pipe-fitting according to any preceding claim, wherein the sleeve (18) is axially fixed within the socket.

7. A pipe-fitting according to Claim 6, wherein the sleeve (18) is provided with a radial projection (22) for location within a radial recess in a wall of the socket for securing the axial position of the sleeve within the socket.

8. A pipe-fitting according to Claim 7, wherein the radial projection (22) is a flange.

9. A pipe-fitting according to any preceding claim, wherein the said sleeve (18) is provided with a substantially cylindrical portion (24) for location in a region adjacent the said socket mouth in order to define an aperture for receiving the said pipe portion (1) into the said socket.

10. A pipe-fitting according to Claim 9, wherein the said sleeve (18) comprises a camming surface on a radially inner surface thereof, for co-operation with a camming surface provided on a radially outer surface of the said retaining element (6), for causing the retaining element (6) to contract, upon axial movement thereof, so as to grip a radially outer surface of the said pipe portion (1).

11. A pipe-fitting according to Claim 10, wherein the camming surface is annular.

12. A pipe-fitting according to Claim 11, wherein the camming surface is connected to the substantially cylindrical portion (24) of the sleeve (18).

13. A pipe-fitting according to Claim 12, wherein the camming surface and substantially cylindrical portion (24) of the sleeve (18) are defined by a plurality of leaves (36) hinged to the remainder of the sleeve (18).

14. A pipe-fitting according to Claim 13, comprising four leaves (36).

15. A pipe fitting according to any of Claims 10 to 12, wherein the said sleeve (18) is divided into two portions (37), the said two portions (37) being assembled together to define the said sleeve (18) during use.

16. A pipe fitting according to Claim 15, wherein the said two portions are hinged together.

17. A pipe fitting according to Claim 15 or 16, wherein the said sleeve (18) is divided in a plane facing a direction parallel to the axial direction, so as to define the two said portions (37).

18. A pipe fitting according to Claim 15 or 16, wherein the said sleeve (18) is divided in a plane facing a direction perpendicular to the said axial direction so as to define said two portions.

19. A pipe fitting according to any of Claims 9 to 18, comprising a second annular seal (48) for sealing between the sleeve (18) and the pipe portion (1).

20. A pipe fitting according to Claim 19, wherein the said sleeve (18) comprises a second radially inwardly directed flange (46) located in a region adjacent the said second seal (48), for protecting the said second seal (48) from the pipe portion (1) when it is inserted into the socket.

21. A pipe fitting according to Claim 20, further comprising a pipe-support sleeve section (42) situated axially inside the said radially inwardly directed flange (20), the said pipe support sleeve section (42), second seal (48) and second radially inwardly directed flange (46) being configured to operate on the radially outer surface of a pipe of a predetermined diameter.

22. A pipe fitting according to Claim 21, wherein the said pipe support sleeve section (42) is provided with a third, radially inwardly directed flange (44) for constraining axial insertion of a pipe into the fitting.

23. A pipe-fitting according to any of Claims 9 to 22, further comprising one or more additional said sleeves, the or each sleeve being configured to co-operate with a pipe of a respectively different diameter, and the sleeves all being interchangeable.

24. A pipe-fitting according to Claim 23, wherein each sleeve is a different colour.

25. A pipe fitting according to any of Claims 1 to 24, wherein the said sleeve (18) further comprises a guard step (50) on an inner surface thereof, for restricting the radial expansion of an incorrectly inserted retaining element (6) situated with the sleeve (18) during use.

26. A pipe fitting according to Claim 25 when dependent upon any of Claims 1 to 18, wherein the guard step (50) is defined by an annular step situated adjacent a surface of the said radially inwardly directed flange (20) that addresses the said retaining element in use.

27. A pipe fitting according to claim 25 when dependent upon Claim 20 or any claim dependent upon Claim 20, wherein the guard step (50) is defined by an annular step situated adjacent a surface of the said second radially inwardly directed flange (46) that addresses the said retaining element (6) in use.

## Patentansprüche

1. Rohrverbindung, umfassend eine Fassung zum Aufnehmen eines Rohrabschnitts (1), wobei die Fassung eine Mündung und eine Bohrung umfasst, wobei die Bohrung ein allgemein zylindrisches Halteelement (6) zum Halten des Rohrabschnitts (1) in der Fassung und eine ringförmige Dichtung (5) zum Abdichten zwischen Fassung und Rohrabschnitt (1) beinhaltet; und ferner umfassend eine Hülse (18), die sich beim Gebrauch in der Fassung befindet, wobei die Hülse (18) einen radial nach innen gerichteten Flansch (20) umfasst, der sich in einer Region neben der Dichtung (5) befindet, um die Dichtung vor dem Rohrabschnitt zu schützen, wenn dieser in die Fassung gesteckt wird; **dadurch gekennzeichnet, dass** das Halteelement (6) in einem ersten Zustand im Wesentlichen gänzlich in der Hülse (18) aufgenommen werden oder axial gleiten kann, um aus der Hülse (18) in einem zweiten Zustand vorzustehen, in dem sie mit der Bohrung interagiert, um eine Greifwirkung auf einen Rohrabschnitt (1) auszuüben.

2. , Rohrverbindung nach Anspruch 1, wobei der radial nach innen gerichtete Flansch (20) einen axialen Vorsprung (28) auf einer der Dichtung (5) zugewandten Oberfläche umfasst.

3. Rohrverbindung nach Anspruch 2, wobei der Vorsprung (28) die Form einer ringförmigen Lippe hat.

4. Rohrverbindung nach Anspruch 3, wobei die ringförmige Lippe mit einer geneigten, radial inneren Fläche (26) versehen ist.

5. Rohrverbindung nach Anspruch 4, wobei die geneigte Fläche (26) im Querschnitt ein konkaves, bogenförmiges Profil hat.

6. Rohrverbindung nach einem der vorherigen Ansprüche, wobei die Hülse (18) axial in der Fassung befestigt ist.

7. Rohrverbindung nach Anspruch 6, wobei die Hülse (18) mit einem radialen Vorsprung (22) zur Positionierung in einer radialen Aussparung in einer Wand der Fassung versehen ist, um die axiale Position der Hülse in der Fassung zu sichern.

8. Rohrverbindung nach Anspruch 7, wobei der radiale Vorsprung (22) ein Flansch ist.

9. Rohrverbindung nach einem der vorherigen Ansprüche, wobei die Hülse (18) mit einem im Wesentlichen zylindrischen Abschnitt (24) zur Positionierung in einer Region neben der Fassungsmündung versehen ist, um eine Öffnung zur Aufnahme des Rohrabschnitts (1) in der Fassung zu definieren.

10. Rohrverbindung nach Anspruch 9, wobei die Hülse (18) eine Nockenfläche auf einer radial inneren Oberfläche davon für die Zusammenwirkung mit einer Nockenfläche umfasst, die auf einer radial äußeren Fläche des Halteelementes (6) vorgesehen ist, um zu bewirken, dass sich das Halteelement (6) nach einer axialen Bewegung davon zusammenzieht, um eine radial äußere Fläche des Rohrabschnitts (1) zu ergreifen.

11. Rohrverbindung nach Anspruch 10, wobei die Nockenfläche ringförmig ist.

12. Rohrverbindung nach Anspruch 11, wobei die Nockenfläche mit dem im Wesentlichen zylindrischen Abschnitt (24) der Hülse (18) verbunden ist

13. Rohrverbindung nach Anspruch 12, wobei die Nockenfläche und der im Wesentlichen zylindrische Abschnitt (24) der Hülse (18) durch eine Mehrzahl von an den Rest der Hülse (18) angelenkten Flügeln (36) definiert wird.

14. Rohrverbindung nach Anspruch 13, die vier Flügel (36) umfasst.

15. Rohrverbindung nach einem der Ansprüche 10 bis 12, wobei die Hülse (18) in zwei Abschnitte (37) unterteilt ist, wobei die beiden Abschnitte (37) so zusammengefügt sind, dass sie beim Gebrauch die Hülse (18) definieren.

16. Rohrverbindung nach Anspruch 15, wobei die beiden Abschnitte aneinander angelenkt sind.

17. Rohrverbindung nach Anspruch 15 oder 16, wobei die Hülse (18) in einer Ebene unterteilt ist, die einer Richtung parallel zur axialen Richtung zugewandt ist, um die beiden Abschnitte (37) zu definieren.

18. Rohrverbindung nach Anspruch 15 oder 16, wobei die Hülse (18) in einer Ebene unterteilt ist, die einer Richtung lotrecht zu der axialen Richtung zugewandt ist, um die beiden Abschnitte zu definieren.

19. Rohrverbindung nach einem der Ansprüche 9 bis 18, umfassend eine zweite ringförmige Dichtung (48) zum Abdichten zwischen der Hülse (18) und dem Rohrabschnitt (1).

20. Rohrverbindung nach Anspruch 19, wobei die Hülse (18) einen zweiten radial nach innen gerichteten Flansch (46) umfasst, der sich in einer Region neben der zweiten Dichtung (48) befindet, um die zweite Dichtung (48) vor dem Rohrabschnitt (1) zu schützen, wenn dieser in die Fassung gesteckt wird,

21. Rohrverbindung nach Anspruch 20, ferner umfassend einen Rohrabstützungshülsenabschnitt (42), der sich axial innerhalb des radial nach innen gerichteten Flansches (20) befindet, wobei der Rohrabstützungshülsenabschnitt (42), die zweite Dichtung (48) und der zweite radial nach innen gerichtete Flansch (46) so konfiguriert sind, dass sie auf die radial äußere Fläche eines Rohres mit einem vorbestimmten Durchmesser wirken.

22. Rohrverbindung nach Anspruch 21, wobei der Rohrabstützungshülsenabschnitt (42) mit einem dritten radial nach innen gerichteten Flansch (44) versehen ist, um das axiale Einstecken eines Rohrs in die Verbindung zu begrenzen.

23. Rohrverbindung nach einem der Ansprüche 9 bis 22, ferner umfassend ein oder mehrere zusätzliche Hülsen, wobei die oder jede Hülse so konfiguriert ist/sind, dass sie mit einem Rohr mit einem jeweils anderen Durchmesser zusammenwirkt/en, und alle Hülsen untereinander austauschbar sind.

24. Rohrverbindung nach Anspruch 23, wobei jede Hülse von einer anderen Farbe ist.

25. Rohrverbindung nach einem der Ansprüche 1 bis 24, wobei die Hülse (18) ferner eine Sicherheitsanschlagstufe (50) auf einer Innenfläche davon aufweist, um die radiale Ausdehnung eines inkorrekt eingesteckten Halteelementes (6) einzuschränken, das sich beim Gebrauch in der Hülse (18) befindet,

26. Rohrverbindung nach Anspruch 25, wenn abhängig von irgendeinem der Ansprüche 1 bis 18, wobei die Sicherheitsanschlagstufe (50) durch eine ringförmige Stufe definiert wird, die sich neben einer Fläche des radial nach innen gerichteten Flansches (20), der das Halteelement beim Gebrauch anspricht, befindet

27. Rohrverbindung nach Anspruch 25, wenn abhängig vom Anspruch 20 oder von irgendeinem Anspruch der vom Anspruch 20 abhängt, wobei die Sicherheitsanschlagstufe (50) durch eine ringförmige Stufe definiert wird, die sich neben einer Fläche des zweiten radial nach innen gerichteten Flansches (46), der das Halteelement (6) beim Gebrauch anspricht, befindet.

## Revendications

1. Raccord de tuyauterie comprenant une douille destinée à recevoir une partie de tuyau (1), ladite douille comprenant une embouchure et un alésage, ledit alésage contenant un élément de retenue généralement cylindrique (6) pour retenir la partie du tuyau (1) dans la douille et un joint annulaire (5) pour établir l'étanchéité entre la douille et la partie du tuyau (1); et comprenant en outre un manchon (18) agencé en service dans la douille, ledit manchon (18) comprenant uns bride dirigée radialement vers l'intérieur (20) agencée dans une région adjacente au joint (5), pour protéger le joint de la partie du tuyau lors de l'insertion dans la douille; **caractérisé en ce que** ledit élément de retenue peut être reçu de manière pratiquement complète dans ledit manchon(18) dans un premier état ou glisser axialement, de sorte à déborder dudit manchon (18) dans un deuxième état,
dans lequel il coopère avec ledit alésage pour assurer une action de saisie sur une dite partie de tuyau (1).

2. Raccord de tuyauterie selon la revendication 1, dans lequel ladite bride dirigée radialement vers l'intérieur (20) comprend une saillie axiale (28) sur une surface opposée audit joint (5).

3. Raccord de tuyauterie selon la revendication 2, dans lequel la saillie (28) a la forme d'un rebord annulaire.

4. Raccord de tuyauterie selon la revendication 3, dans lequel ledit rebord annulaire comporte une surface interne à inclinaison radiale (26).

5. Raccord de tuyauterie selon la revendication 4, dans lequel ladite surface inclinée (26) a une section transversale concave à profil arqué.

6. Raccord de tuyauterie selon l'une quelconque des revendications précédentes, dans lequel le manchon (18) est fixé axialement dans la douille.

7. Raccord de tuyauterie selon la revendication 6, dans lequel le manchon (18) comporte une saillie radiale (22) destinée à être positionnée dans un évidement radial dans une paroi de la douille pour maintenir la position axiale du manchon dans la douille.

8. Raccord de tuyauterie selon la revendication 7, dans lequel la saillie radiale (22) est constituée par une bride.

9. Raccord de tuyauterie selon l'une quelconque des revendications précédentes, dans lequel ledit manchon (18) comporte une partie pratiquement cylindrique (24) destinée à être positionnée dans une région adjacente à ladite embouchure de la douille pour définir une ouverture destinée à recevoir ladite partie du tuyau (1) dans ladite douille.

10. Raccord de tuyauterie selon la revendication 9, dans lequel ledit manchon (18) comprend une surface à came sur une surface radialement interne, destinée à coopérer avec une surface à came agencée sur une surface radialement externe dudit élément de retenue (6), pour entraîner la contraction de l'élément de retenue (6) lors d'un déplacement axial correspondant, de sorte à saisir une surface radialement externe de ladite partie du tuyau (1).

11. Raccord de tuyauterie selon la revendication 10, dans lequel la surface à came est annulaire.

12. Raccord de tuyauterie selon la revendication 11, dans lequel la surface à came est connectée à la partie pratiquement cylindrique (24) du manchon (18).

13. Raccord de tuyauterie selon la revendication 12, dans lequel la surface à came et la partie pratiquement cylindrique (24) du manchon (18) sont définies par plusieurs lamelles (36) fixées par charnière sur la partie restante du manchon (18).

14. Raccord de tuyauterie selon la revendication 13, comprenant quatre lamelles (36).

15. Raccord de tuyauterie selon l'une quelconque des revendications 10 à 12, dans lequel ledit manchon (18) est divisé en deux parties (37), lesdites deux parties (37) étant assemblées pour définir ledit manchon (18) en service.

16. Raccord de tuyauterie selon la revendication 15, dans lequel lesdites deux parties sont assemblées par charnière.

17. Raccord de tuyauterie selon les revendications 15 ou 16, dans lequel ledit manchon (18) est divisé en un plan orienté dans une direction parallèle à la direction axiale, de sorte à définir lesdites deux parties (37).

18. Raccord de tuyauterie selon les revendications 15 ou 16, dans lequel ledit manchon (18) est divisé en un plan orienté dans une direction perpendiculaire à la direction axiale, de sorte à définir lesdites deux parties.

19. Raccord de tuyauterie selon l'une quelconque des revendications 9 à 18, comprenant un deuxième joint annulaire (48) pour établir l'étanchéité entre le manchon (18) et la partie du tuyau (1).

20. Raccord de tuyauterie selon la revendication 19, dans lequel ledit manchon (18) comprend une deuxième bride orientée radialement vers l'intérieur (46), agencée dans une région adjacente audit deuxième joint (48), pour protéger ledit deuxième joint (48) de la partie du tuyau (1) lors de son insertion dans la douille.

21. Raccord de tuyauterie selon la revendication 20, comprenant en outre une section de manchon à support du tuyau (42) agencée axialement vers l'intérieur de ladite bride orientée radialement vers l'intérieur (20), ladite section du manchon à support du tuyau (42), ledit deuxième joint (48) et ladite deuxième bride orientée radialement vers l'intérieur (46) étant configurés de sorte à fonctionner sur la surface radialement externe d'un tuyau ayant un diamètre prédéterminé.

22. Raccord de tuyauterie selon la revendication 21, dans lequel ladite section du manchon à support du tuyau (42) comporte une troisième bride orientée radialement vers l'intérieur (44) pour limiter l'insertion axiale d'un tuyau dans le raccord,

23. Raccord de tuyauterie selon l'une quelconque des revendications 9 à 22, comprenant en outre un ou plusieurs manchons additionnels, le ou chaque manchon étant destiné à coopérer avec un tuyau ayant un diamètre respectivement différent, les manchons étant tous interchangeables.

24. Raccord de tuyauterie selon la revendication 23, dans lequel chaque manchon a une couleur différente.

25. , Raccord de tuyauterie selon l'une quelconque des revendications 1 à 24, dans lequel ledit manchon (18) comprend en outre un gradin de protection (50) sur une surface interne correspondante, pour limiter la dilatation radiale d'un élément de retenue (6) inséré de manière incorrecte (6), agencé sur le manchon (18) en service.

26. Raccord de tuyauterie selon la revendication 25, lorsque dépendant de l'une quelconque des revendications 1 à 18, dans lequel le gradin de protection (50) et défini par un gradin annulaire agencé près d'une surface de ladite bride orientée radialement vers l'intérieur (20), qui adresse ledit élément de retenue en service.

27. Raccord de tuyauterie selon la revendication 25, lorsque dépendant de la revendication 20 ou de n'importe quelle revendication dépendante de la revendication 20, dans lequel le gradin de protection (50) et défini par un gradin annulaire agencé près d'une surface de ladite deuxième bride orientée radialement vers l'intérieur (46), qui adresse ledit élément de retenue (6) en service.
